# EUROPÄISCHE PATENTSCHRIFT

(11) **EP 1 152 175 B1**
(45) Veröffentlichungstag und Bekanntmachung des Hinweises auf die Patenterteilung: **25.02.2004**
(21) Anmeldenummer: 00109677.5
(22) Anmeldetag: 06.05.2000
(51) Int. Cl.: F16J 15/08

(54) **Flachdichtung**
Flat gasket
Joint plat

(43) Veröffentlichungstag der Anmeldung: 07.11.2001
(73) Patentinhaber: ElringKlinger AG, 72581 Dettingen (DE)
(72) Erfinder: Diez, Armin, 73252 Lenningen (DE); Fritz, Wolfgang, 72555 Metzingen (DE); Böhringer, Peter, 72584 Hülben (DE)
(74) Vertreter: Hörner, Andreas

(56) Entgegenhaltungen:
- EP-A- 0 500 274
- US-A- 5 544 902

## Beschreibung

Die vorliegende Erfindung betrifft eine Flachdichtung zur Anordnung zwischen zwei Komponenten eines Kraftfahrzeugs, insbesondere zwischen einem Motorblock und einem Zylinderkopf, welche eine oder mehrere Lagen umfaßt, wobei in der Lage oder den Lagen der Flachdichtung jeweils mindestens ein Positionierkanal-Durchgangsloch gebildet ist und diese Positionierkanal-Durchgangslöcher mindestens einen Positionierkanal zur Aufnahme eines an einer der Komponenten angeordneten Positionierelements bilden und wobei mindestens eine Lage der Flachdichtung als Klemmlage ausgebildet ist, in welcher ein Klemmelement mit mindestens einem Klemmbereich angeordnet ist, der sich vor Einführen des Positionierelements in den Positionierkanal zumindest teilweise in dem Positionierkanal befindet und nach Einführen des Positionierelements in den Positionierkanal so in Klemmkontakt mit dem Positionierelement steht, daß die Flachdichtung durch Klemmwirkung an dem Positionierelement gehalten ist.

Solche Flachdichtungen sind beispielsweise aus der EP 0 500 274 A1 oder der EP 0 500 282 A1 bekannt.

Die aus der EP 0 500 274 A1 oder der EP 0 500 282 A1 bekannten Flachdichtungen umfassen jeweils mindestens zwei Lagen, wobei eine Lage als Klemmlage dient und ein Blech und mindestens ein klappenförmiges, einstückig mit dem Blech ausgebildetes Klemmelement umfaßt, welches beim Einführen des Positionierelements in den Positionierkanal aus der Klemmlage hinaus in eine Ausnehmung hinein verformt wird, welche in einer an die Klemmlage angrenzenden weiteren Lage der Flachdichtung ausgebildet ist.

Bei der Flachdichtung gemäß der EP 0 500 274 A1 ist diese Ausnehmung als Kerbe ausgebildet. Bei der Flachdichtung gemäß der EP 0 500 282 A1 ist diese Ausnehmung als ringförmiger Rand des Positionierkanal-Durchgangslochs in der an die Klemmlage angrenzenden weiteren Lage der Flachdichtung ausgebildet.

Bei diesen bekannten Flachdichtungen ist von Nachteil, daß - in der Einführungsrichtung des Positionierelements in den Positionierkanal gesehen - hinter der Klemmlage auf jeden Fall mindestens eine weitere Lage der Flachdichtung angeordnet sein muß, damit diese weitere Lage den verformten Bereich des Klemmelements der Klemmlage aufnehmen kann. Diese weitere Lage der Flachdichtung muß überdies eine hinreichende Dicke aufweisen, um den verformten Bereich des Klemmelements vollständig aufnehmen zu können, was die Gestaltungsfreiheit bei der Konstruktion der Flachdichtung erheblich einschränkt. Außerdem sind die aus der EP 0 500 274 A1 und der EP 0 500 282 A1 bekannten Flachdichtungen nur mit der Klemmlage voran auf die Positionierelemente aufdrückbar; ein Aufsetzen dieser Flachdichtungen auf den Motorblock in umgekehrter Orientierung ist nicht möglich, da bei diesen Flachdichtungen die Klemmlage stets eine Randlage bildet und somit bei Aufdrücken der Flachdichtung mit umgekehrter Orientierung der verformte Bereich des Klemmelements über die Randlage der Flachdichtung hinaus verformt würde und dann die einer Motorkomponente zugewandte Außenseite dieser Randlage nicht vollflächig an der betreffenden Motorkomponente anliegen könnte.

Außerdem werden die Klemmelemente der aus der EP 0 500 274 A1 und der EP 0 500 282 A1 bekannten Flachdichtungen beim Einführen des Positionierelements in den Positionierkanal plastisch verformt, so daß die erzielte Klemmkraft vermindert wird, wenn diese Flachdichtungen mehrfach von den Positionierelementen abgenommen und wieder auf Positionierelemente einer Motorkomponente aufgesetzt werden.

Der vorliegenden Erfindung liegt daher die Aufgabe zugrunde, eine Flachdichtung der eingangs genannten Art zu schaffen, die vielseitiger gestaltbar und einsetzbar ist als die bekannten Flachdichtungen.

Diese Aufgabe wird bei einer Flachdichtung mit den Merkmalen des Oberbegriffs von Anspruchs 1 erfindungsgemäß dadurch gelöst, daß die Klemmlage der Flachdichtung eine Ausnehmung zur Aufnahme des Klemmelements umfaßt und daß das Klemmelement beim Einführen des Positionierelements in den Positionierkanal zumindest teilweise längs einer Verschiebungsrichtung, die im wesentlichen parallel zu der Klemmlage gerichtet ist, innerhalb der Klemmlage in die Ausnehmung hinein bewegt wird.

Unter dem Begriff "Positionierkanal" ist dabei derjenige Bereich der Flachdichtung zu verstehen, welcher nach dem Einführen des Positionierelements vollständig von dem Positionierelement ausgefüllt wird.

Unter einer "parallel zu der Klemmlage" gerichteten Verschiebungsrichtung ist eine parallel zu den ebenen Hauptflächen (Unterseite und Oberseite) der Klemmlage gerichtete Verschiebungsrichtung zu verstehen.

Wird das Positionierelement senkrecht zu den Lagen der Flachdichtung in den Positionierkanal eingeführt, so ist die Verschiebungsrichtung des Klemmelements im wesentlichen senkrecht zur Achse des Positionierkanals gerichtet.

Unterschiedliche Bereiche des Klemmelements können dabei längs unterschiedlicher Verschiebungsrichtungen, die jedoch alle im wesentlichen parallel zu der Klemmlage gerichtet sind, bewegt werden. Insbesondere ist denkbar, daß unterschiedliche Bereiche des Klemmelements längs unterschiedlicher Verschiebungsrichtungen, welche radial zu der Achse des Positionierkanals gerichtet sind, bewegt werden.

Das erfindungsgemäße Konzept bietet den Vorteil, daß die Klemmfunktion allein durch die Gestaltung der Klemmlage gewährleistet ist, ohne daß hierzu die an die Klemmlage angrenzenden Lagen der Flachdichtung in besonders angepaßter Weise gestaltet werden müßten. Insbesondere ist es möglich, daß die erfindungsgemäße Flachdichtung nur die Klemmlage und keine weitere Lage umfaßt, da das Klemmelement die Klemmlage nicht verläßt.

Da das Klemmelement vollständig innerhalb der Klemmlage verschoben wird, ist es ferner nicht erforderlich, in den an die Dichtung angrenzenden Komponenten des Kraftfahrzeugs, beispielsweise im Motorblock oder im Zylinderkopf, Ausnehmungen oder Anfasungen zur Aufnahme des Klemmelements vorzusehen.

Außerdem gewährleistet die Klemmlage der erfindungsgemäßen Flachdichtung die gewünschte Klemmwirkung unabhängig davon, in welcher Orientierung die Flachdichtung auf das Positionierelement aufgedrückt wird.

Ferner kann das Klemmelement der erfindungsgemäßen Flachdichtung so ausgebildet werden, daß es sich nach Entfernen des Positionierelements aus dem Positionierkanal in seine ursprüngliche Lage zurückbewegt, so daß die erfindungsgemäße Flachdichtung ohne weiteres mehrmals auf ein Positionierelement aufgedrückt werden kann, ohne daß die Klemmkraft in erheblichem Maße nachläßt.

Durch die Klemmung der Flachdichtung an dem Positionierelement kann die erste Fahrzeugkomponente zusammen mit der Flachdichtung in beliebiger Orientierung, insbesondere auch in Kopfüberstellung, zu dem Ort transportiert werden, an welchem die zweite Komponente auf die erste Komponente mit der Flachdichtung aufgesetzt wird, ohne daß die Flachdichtung sich von der ersten Komponente löst.

Um die Flachdichtung möglichst exakt relativ zu dem Positionierelement oder den Positionierelementen positionieren zu können, ist es von Vorteil, wenn die Flachdichtung außer der Klemmlage mindestens eine Positionierlage umfaßt, deren zum Positionierkanal gehörendes Positionierkanal-Durchgangsloch als ein Positionierloch für das Positionierelement ausgebildet ist, das im wesentlichen denselben Querschnitt wie das Positionierelement aufweist.

Um die Positioniergenauigkeit weiter zu erhöhen, kann vorgesehen sein, daß die Flachdichtung mindestens zwei Positionierlagen umfaßt.

Um die erzielbare Klemmkraft, mit welcher die Flachdichtung an dem Positionierelement gehalten ist, zu erhöhen, kann vorgesehen sein, daß die Flachdichtung mindestens zwei Klemmlagen umfaßt.

Zur Ausbildung des Klemmelements wurden bislang noch keine näheren Angaben gemacht.

Besonders einfach herzustellen ist die erfindungsgemäße Flachdichtung, wenn vorteilhafterweise vorgesehen ist, daß die Klemmlage eine Platte aus einem metallischen Material umfaßt und daß das Klemmelement einstückig mit dieser Platte ausgebildet ist.

Eine solche Klemmlage kann insbesondere durch einen einfachen Stanzvorgang hergestellt werden.

Bei einer bevorzugten Ausgestaltung der erfindungsgemäßen Flachdichtung ist vorgesehen, daß das Klemmelement als Steg ausgebildet ist, welcher das zum Positionierkanal gehörende Positionierkanal-Durchgangsloch der Klemmlage und die in der Klemmlage vorgesehene Ausnehmung zur Aufnahme des Klemmelements voneinander trennt. Da ein solches Klemmelement an seinen beiden Enden fest mit der Platte der Klemmlage verbunden ist, besteht nur eine geringe Gefahr, daß das Klemmelement abbrechen und dadurch die erwünschte Klemmwirkung verlorengehen könnte. Außerdem kann ein in dieser Weise ausgebildetes Klemmelement eine hohe Rückstellkraft aufweisen, so daß eine Rückkehr in die Ausgangsstellung nach Entfernen des Positionierelements aus dem Positionierkanal gewährleistet ist.

Alternativ hierzu kann auch vorgesehen sein, daß die Klemmlage eine Platte aus einem metallischen Material umfaßt und daß das Klemmelement als separates Teil ausgebildet ist. Dies ermöglicht es, für das Klemmelement ein von dem Material der Klemmlage verschiedenes Material auszuwählen, welches beispielsweise eine höhere Elastizität aufweist und somit eine Rückkehr des Klemmelements in die Ausgangslage nach Entfernen des Positionierelements aus dem Positionierkanal begünstigt.

Ein solches separates Klemmelement kann beispielsweise als ringförmiges Federelement ausgebildet sein.

Alternativ hierzu kann ein solches separates Klemmelement als an mindestens einem Ende mittels einer Halterung an der Platte gehaltenes Federelement ausgebildet sein.

In jedem Fall ist es günstig, wenn das Klemmelement eine solche Elastizität aufweist, daß es sich nach Entfernen des Positionierelements aus dem Positionierkanal zumindest teilweise in den Positionierkanal zurückbewegt, damit eine ausreichende Klemmwirkung auch bei wiederholtem Aufdrücken der Flachdichtung auf ein Positionierelement gewährleistet ist, ohne daß das Klemmelement durch Einwirkung von außen in den Ursprungszustand zurückversetzt werden muß.

Um die erzielbare Klemmkraft zu erhöhen, kann ferner vorgesehen sein, daß das Klemmelement mindestens zwei voneinander beabstandete Klemmbereiche aufweist.

Die erfindungsgemäß Flachdichtung eignet sich insbesondere zur Verwendung bei einer Komponente eines Kraftfahrzeugs, insbesondere einem Motorblock oder Zylinderkopf, welcher mindestens ein daran angeordnetes Positionierelement und eine durch Klemmwirkung an dem Positionierelement gehaltene erfindungsgemäße Flachdichtung umfaßt.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: eine Draufsicht auf eine erfindungsgemäße Flachdichtung;
- Fig. 2: eine Draufsicht auf einen Positionierkanal einer ersten Ausführungsform einer Flachdichtung, die eine Klemmlage zwischen zwei Positionierlagen und ein als Steg ausgebildetes Klemmelement aufweist, vor dem Einführen des Positionierelements;
- Fig. 3: einen schematischen Schnitt durch die Flachdichtung aus Fig. 2 längs der Linie 3-3;
- Fig. 4: eine teilweise geschnittene Draufsicht auf die Flachdichtung aus Fig. 2 nach dem Einführen des Positionierelements;
- Fig. 5: einen schematischen Schnitt durch die Flachdichtung und das Positionierelement aus Fig. 4 längs der Linie 5-5;
- Fig. 6: eine Draufsicht auf den Positionierkanal einer zweiten Ausführungsform einer Flachdichtung, welche eine Positionierlage zwischen zwei Klemmlagen und als Steg mit jeweils einem Klemmbereich ausgebildete Klemmelemente aufweist, vor dem Einführen des Positionierelements;
- Fig. 7: einen schematischen Schnitt durch die Flachdichtung aus Fig. 6 längs der Linie 7-7;
- Fig. 8: eine teilweise geschnittene Draufsicht auf die Flachdichtung aus Fig. 6 nach dem Einführen des Positionierelements;
- Fig. 9: einen schematischen Schnitt durch die Flachdichtung und das Positionierelement aus Fig. 8 längs der Linie 9-9;
- Fig. 10: eine Draufsicht auf den Positionierkanal einer dritten Ausführungsform einer Flachdichtung, welche eine Positionierlage zwischen zwei Klemmlagen und als Steg mit jeweils zwei Klemmbereichen ausgebildete Klemmelemente aufweist, vor dem Einführen des Positionierelements;
- Fig. 11: einen schematischen Schnitt durch die Flachdichtung aus Fig. 10 längs der Linie 11-11;
- Fig. 12: eine teilweise geschnittene Draufsicht auf die Flachdichtung aus Fig. 10 nach dem Einführen des Positionierelements;
- Fig. 13: einen schematischen Schnitt durch die Flachdichtung und das Positionierelement aus Fig. 12 längs der Linie 13-13;
- Fig. 14: eine Draufsicht auf den Positionierkanal einer vierten Ausführungsform einer Flachdichtung, welche eine Klemmlage zwischen zwei Positionierlagen und ein als Zunge ausgebildetes Klemmelement aufweist, vor dem Einführen des Positionierelements;
- Fig. 15: einen schematischen Schnitt durch die Flachdichtung aus Fig. 14 längs der Linie 15-15;
- Fig. 16: eine teilweise geschnittene Draufsicht auf die Flachdichtung aus Fig. 14 nach dem Einführen des Positionierelements;
- Fig. 17: einen schematischen Schnitt durch die Flachdichtung und das Positionierelement aus Fig. 16 längs der Linie 17-17;
- Fig. 18: eine Draufsicht auf den Positionierkanal einer fünften Ausführungsform einer Flachdichtung, welche eine Klemmlage zwischen zwei Positionierlagen und ein als Federspange ausgebildetes separates Klemmelement aufweist, vor dem Einführen des Positionierelements;
- Fig. 19: einen schematischen Schnitt durch die Flachdichtung aus Fig. 18 längs der Linie 19-19;
- Fig. 20: eine teilweise geschnittene Draufsicht auf die Flachdichtung aus Fig. 18 nach dem Einführen des Positionierelements;
- Fig. 21: einen schematischen Schnitt durch die Flachdichtung und das Positionierelement aus Fig. 20 längs der Linie 21-21;
- Fig. 22: eine Draufsicht auf den Positionierkanal einer sechsten Ausführungsform einer Flachdichtung, welche eine Klemmlage zwischen zwei Positionierlagen und ein als Federring ausgebildetes separates Klemmelement aufweist, vor dem Einführen des Positionierelements;
- Fig. 23: einen schematischen Schnitt durch die Flachdichtung aus Fig. 22 längs der Linie 23-23;
- Fig. 24: eine teilweise geschnittene Draufsicht auf die Flachdichtung aus Fig. 22 nach dem Einführen des Positionierelements; und
- Fig. 25: einen schematischen Schnitt durch die Flachdichtung und das Positionierelement aus Fig. 24 längs der Linie 25-25.

Gleiche oder funktional äquivalente Elemente sind in allen Figuren mit denselben Bezugszeichen bezeichnet.

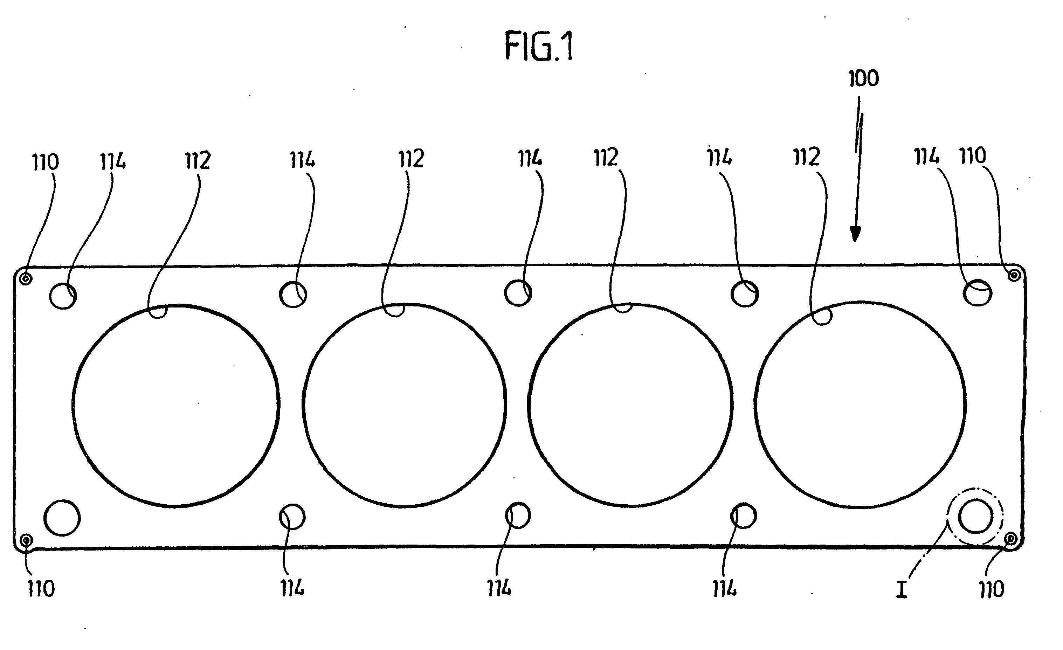

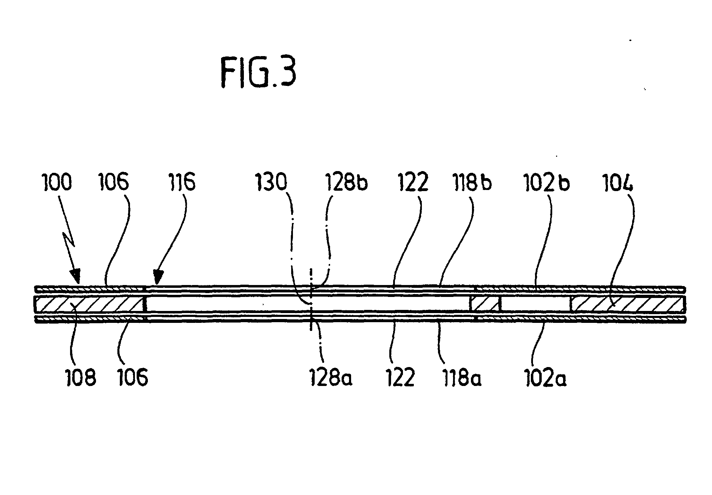

Ein in den Fig. 1 bis 5 dargestellte, als ganzes mit 100 bezeichnete Flachdichtung umfaßt, wie am besten aus Fig. 3 zu ersehen ist, drei übereinander angeordnete Lagen, nämlich eine untere Positionierlage 102a, eine obere Positionierlage 102b und eine zwischen den beiden Positionierlagen angeordnete Klemmlage 104.

Jede der Lagen 102a, 102b, 104 umfaßt jeweils eine im wesentlichen rechteckige Platte 106 bzw. 108 aus Stahlblech, aus welchem durch Stanzen im folgenden näher beschriebene Durchgangsöffnungen ausgebildet sind.

Die Dicken der Platten 106 der Positionierlagen einerseits und der Platte 108 der Klemmlage andererseits können einander gleich oder verschieden voneinander gewählt werden; vorzugsweise wird die Dicke der Platte 108 der Klemmlage 104 größer gewählt als die Dicke der Platten 106 der Positionierlagen 102a, 102b.

Die Materialien der Platten 106 und 108 können einander gleich oder verschieden voneinander sein. Vorzugsweise wird für die Platte 108 der Klemmlage 104 ein Material gewählt, welches eine hohe Elastizität aufweist.

Wie am besten aus Fig. 1 zu ersehen ist, sind die Positionierlagen 102a, 102b und die Klemmlage 104 mittels in den vier Eckbereichen der Flachdichtung 100 angeordneter Nieten 110 fest miteinander verbunden, so daß die Positionierlagen 102a, 102b nicht von der Klemmlage 104 gelöst werden können.

Die in den Fig. 1 bis 5 dargestellte Flachdichtung 100 soll als Zylinderkopfdichtung dienen und ist darum mit mehreren, beispielsweise vier, Brennraumöffnungen 112 versehen, die durch in der Klemmlage 104 und den Positionierlagen 102a, 102b vorgesehene, jeweils miteinander fluchtende Durchgangslöcher gebildet sind.

Ferner umfaßt die Flachdichtung 100 rein schematisch dargestellte Durchgangskanäle 114, welche ebenfalls aus in der Klemmlage 104 und den Positionierlagen 102a, 102b vorgesehenen Durchgangslöchern, die miteinander fluchten, gebildet sind und in bekannter Weise als Ölkanäle, Wasserkanäle oder zur Aufnahme von Verbindungsbolzen, welche den Motorblock und den Zylinderkopf eines Motors verbinden, in dem die Flachdichtung 100 als Zylinderkopfdichtung verwendet wird, dienen.

Ferner umfaßt die Flachdichtung 100 zwei Positionierkanäle 116, welche jeweils nahe eines Eckbereichs der Flachdichtung 100 angeordnet sind und deren Aufbau im folgenden näher beschrieben werden wird.

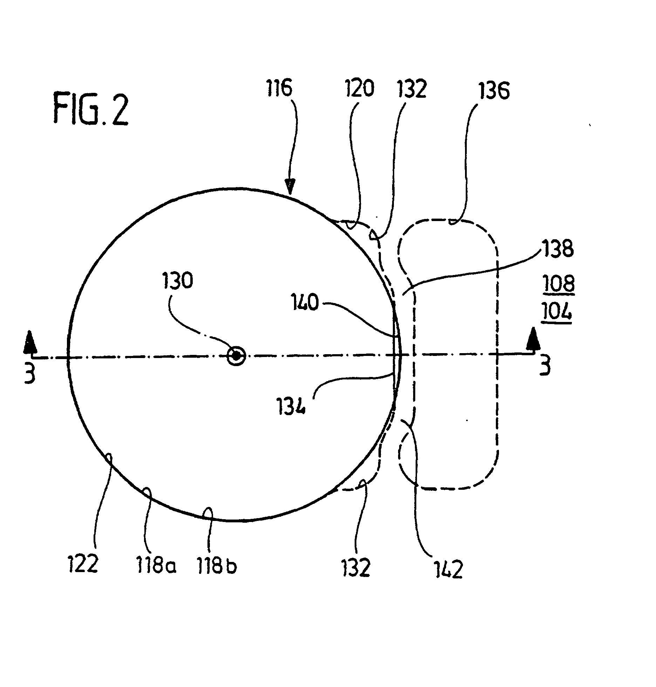

Wie am besten aus den Fig. 2 und 3 zu ersehen ist, ist jeder der Positionierkanäle 116 durch zwei in den Positionierlagen 102a, 102b ausgebildete Positionierkanal-Durchgangslöcher 118a, 118b und ein in der Klemmlage 104 ausgebildetes Positionierkanal-Durchgangsloch 120 gebildet, welche miteinander fluchten.

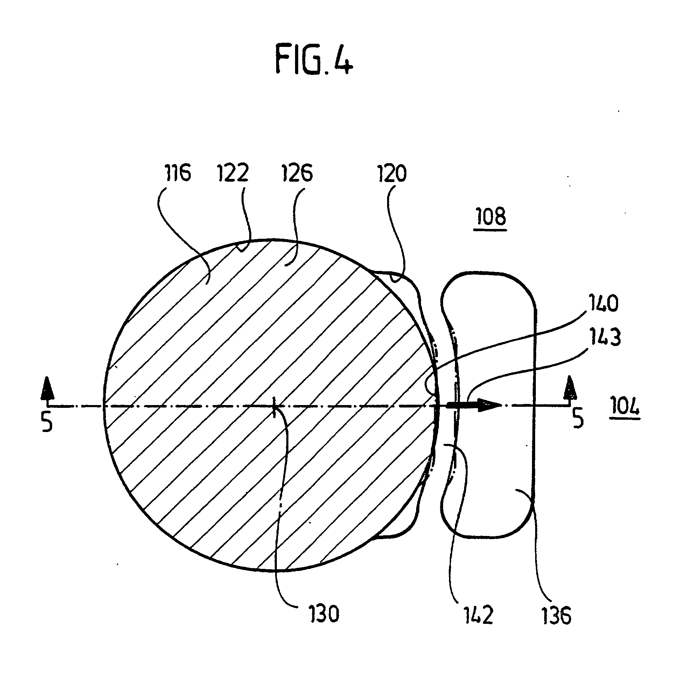

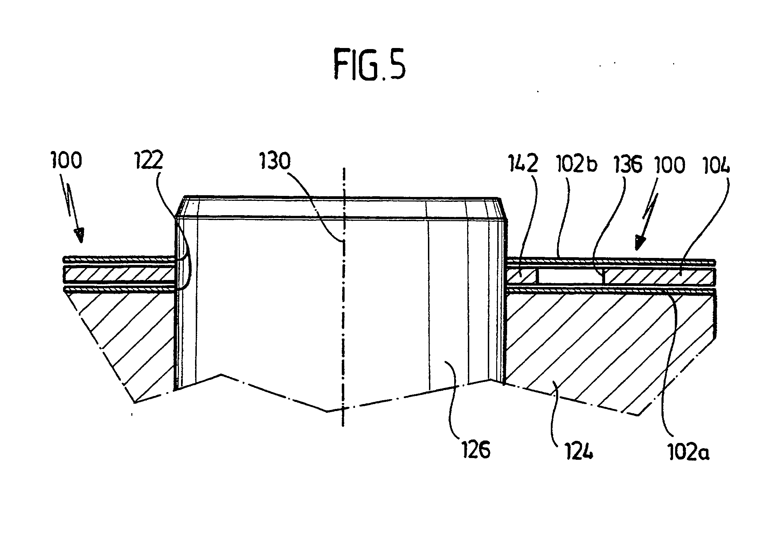

Die Positionierkanal-Durchgangslöcher 118a, 118b in den Positionierlagen 102a, 102b sind als Positionierlöcher 122 ausgebildet, das heißt, diese Durchgangslöcher entsprechen im wesentlichen dem Querschnitt eines am Motorblock 124 festgelegten Positionierelements 126 (siehe Fig. 4 und 5), welches bei der Montage der Flachdichtung 100 am Motorblock 124 in den jeweils zugeordneten Positionierkanal 116 eingeführt wird.

Im gezeigten Ausführungsbeispiel ist das Positionierelement 126 als zylindrischer Positionierstift ausgebildet, welcher an seiner Stirnseite mit einer Anfasung versehen ist, um das Einführen des Positionierstifts in den jeweiligen Positionierkanal 116 zu erleichtern.

Wegen der zylindrischen Gestalt des Positionierelements 126 sind die Positionierlöcher 122 in den Positionierlagen 102a, 102b im wesentlichen kreisförmig ausgebildet, wobei der Durchmesser der Positionierlöcher 122 im wesentlichen gleich groß ist wie der Durchmesser des Positionierelements 126.

Zum Ausgleich von Toleranzen bei der Herstellung der Flachdichtung 100 und bei der Anordnung der Positionierelemente 126 am Motorblock 124 kann der Durchmesser der Positionierlöcher 122 geringfügig größer als der Durchmesser des Positionierelements 126 gewählt werden. Ferner kann vorgesehen sein, daß die Positionierlöcher 122 geringfügig von der Kreisform abweichen und beispielsweise leicht elliptische Form aufweisen.

Die Mittelpunkte 128a, 128b der Positionierlöcher 122 definieren die Lage der Mittelachse 130 des Positionierkanals 116, welche senkrecht zu den Lagen 102a, 102b und 104 der Flachdichtung 100 durch die Mittelpunkte 128a und 128b verläuft.

Wie am besten aus Fig. 2 zu ersehen ist, in welcher die Kontur des Positionierkanal-Durchgangslochs 120 der Klemmlage 104 in gebrochenen Linien dargestellt ist, weicht das Positionierkanal-Durchgangsloch 120 von der Kreisform der Positionierlöcher 122 dadurch ab, daß das Positionierkanal-Durchgangsloch 120 zwei Ausbuchtungen 132 aufweist, welche in Bezug auf die Mittelachse 130 des Positionierkanals 116 in einem Winkelabstand von ungefähr 90° angeordnet sind und miteinander durch einen geradlinigen Abschnitt der Berandung des Positionierkanal-Durchgangslochs 120, welcher als Klemmrand 134 dient, verbunden sind.

Wie ferner aus Fig. 2 zu ersehen ist, ist neben dem Positionierkanal-Durchgangsloch 120 in der Klemmlage 104 eine - ebenfalls in gebrochenen Linien dargestellte - Ausnehmung 136 ausgebildet, welche ebenfalls ein Durchgangsloch in der Klemmlage 104 darstellt.

Die dem Positionierkanal-Durchgangsloch 120 zugewandte Berandung der Ausnehmung 136 folgt der Berandung des Positionierkanal-Durchgangslochs 120 in einem im wesentlichen konstantem Abstand, so daß die Ausnehmung 136 von dem Positionierkanal-Durchgangsloch 120 durch einen Steg 138 von im wesentlichen konstanter Breite getrennt ist.

Wie aus Fig. 2 zu ersehen ist, steht der durch den geradlinigen Klemmrand 134 begrenzte Bereich des Steges 138 über die Berandungen der Positionierlöcher 122 in den Positionierlagen 102a, 102b hinaus in den Positionierkanal 116 vor, solange das Positionierelement 126 noch nicht in den Positionierkanal 116 eingeführt worden ist. Dieser in den Positionierkanal 116 vorstehende Bereich des Steges 138 wird im folgenden als Klemmbereich 140, der Steg 138 insgesamt als Klemmelement 142 bezeichnet werden.

Wird bei der Montage der Flachdichtung 100 an dem Motorblock 124 die Flachdichtung 100 mit der unteren Positionierlage 102a voran auf die beiden Positionierelemente 126 des Motorblocks 124 aufgedrückt, so gelangt jedes Positionierelement 126 mit seiner angefasten Spitze voran durch das Positionierloch 122 in der unteren Positionierlage 102a in das Positionierkanal-Durchgangsloch 120 der Klemmlage 104, wo es das Klemmelement 142 längs einer radialen, das heißt senkrecht zur Mittelachse 130 des Positionierkanals 116, und parallel zur Klemmlage 104 verlaufenden Verschieberichtung 143 in die Ausnehmung 136 hinein verdrängt.

Dabei verformt sich das Klemmelement 142 insbesondere im Klemmbereich 140 so, daß sich der Klemmrand 134 an den Umfang des Positionierelements 126 anlegt.

Die Verformung des Klemmelements 142 erfolgt zumindest teilweise elastisch, so daß der Klemmbereich 140 durch eine elastische Rückstellkraft des Klemmelements 142 gegen die Mantelfläche des Positionierelements 126 gedrückt wird und so in Klemmkontakt mit dem Positionierelement 126 steht, daß das Klemmelement 142, die einstückig mit dem Klemmelement 142 ausgebildete Platte 108 der Klemmlage 104 und die über die Nieten 110 mit der Klemmlage 104 verbundenen Pösitionierlagen 102a, 102b der Flachdichtung 100 durch Klemmwirkung an dem Positionierelement 126 gehalten sind.

Wie aus Fig. 5 zu ersehen ist, durchsetzt das Positionierelement 126 nach dem vollständigen Aufdrücken der Flachdichtung 100 auch das Positionierloch 122 in der oberen Positionierlage 102b.

Die Berandungen der Positionierlöcher 122 in den Positionierlagen 102a, 102b liegen zumindest abschnittsweise an der Mantelfläche des jeweiligen Positionierelements 126 an und gewährleisten somit eine genaue Positionierung und Ausrichtung der Flachdichtung 100 an dem Motorblock 124 relativ zu den Positionierelementen 126. Da die Flachdichtung 100 durch Klemmwirkung an dem Motorblock 124 gehalten ist und auch dann nicht von den Positionierelementen herunterfallen kann, wenn der Motorblock 124 in einer Kopfüberstellung gefördert wird, in welcher die Flachdichtung 100 unterhalb des Motorblocks 124 angeordnet ist, kann sich die Flachdichtung 100 nicht vom Motorblock 124 lösen, bis der (nicht dargestellte) Zylinderkopf auf die obere Positionierlage 102b der Flachdichtung 100 aufgesetzt und mittels (nicht dargestellter) Verbindungsbolzen mit dem Motorblock 124 verschraubt wird.

Bei dem vorstehend beschriebenen Ausführungsbeispiel sind die Positionierelemente 126 am Motorblock 124 festgelegt und wird die Flachdichtung 100 zunächst am Motorblock 124 montiert.

Es ist jedoch ohne weiteres denkbar, daß die Positionierelemente 126 statt dessen am Zylinderkopf festgelegt sind und die Flachdichtung 100 zunächst mit dem Zylinderkopf verbunden wird, bevor der Zylinderkopf auf den Motorblock 124 aufgesetzt und mit diesem verschraubt wird.

Vorzugsweise ist die Flachdichtung 100 bezüglich der mittleren Klemmlage 104 symmetrisch aufgebaut, so daß sie sowohl mit der unteren Positionierlage 102a als auch mit der oberen Positionierlage 102b voran auf die Positionierelemente 126 aufgedrückt werden kann.

Da die Positionierlagen 102a, 102b das jeweilige Positionierelement 126 im wesentlichen paßgenau umgreifen, bleibt die Ausweichbewegung des Klemmelements 142 auf die Ebene der Klemmlage 104 beschränkt; das Klemmelement 142 wird somit lediglich durch das Positionierelement 126 in die Ausnehmung 136 hinein verschoben, ohne sich so zu verformen, daß ein Teil desselben in eine benachbarte Lage der Flachdichtung 100 hinein gelangt.

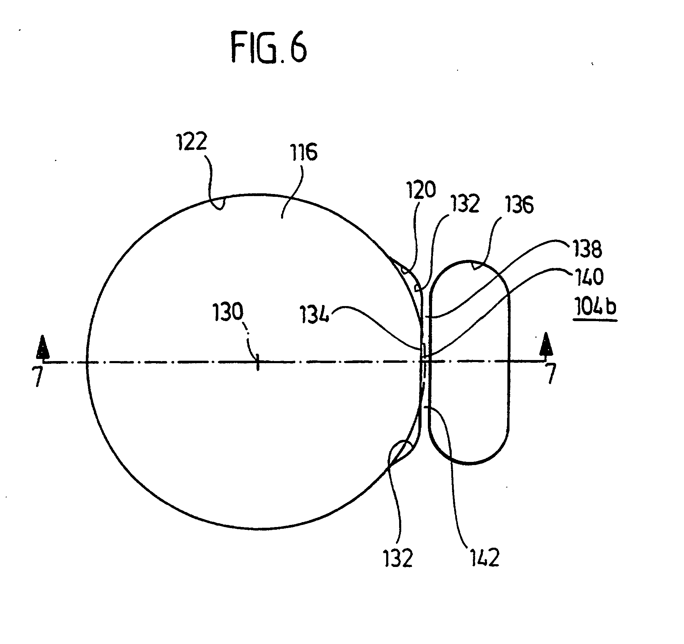

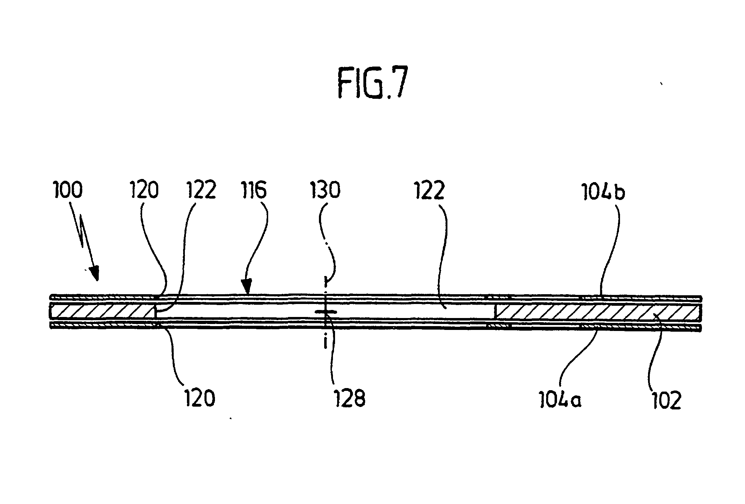

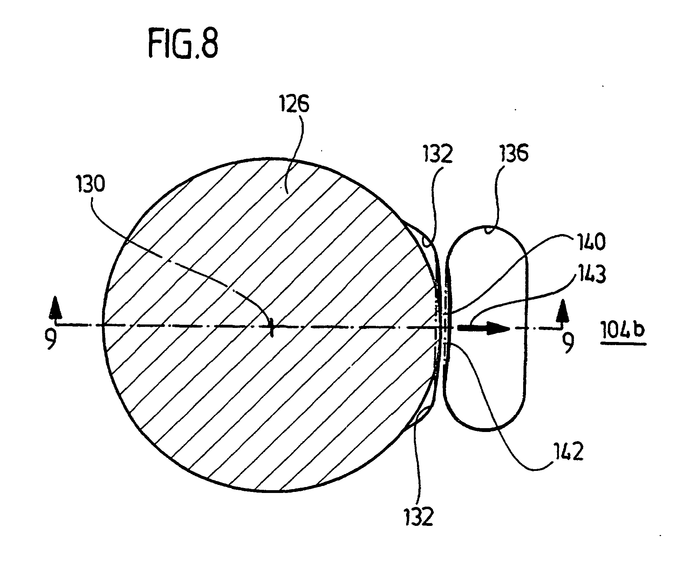

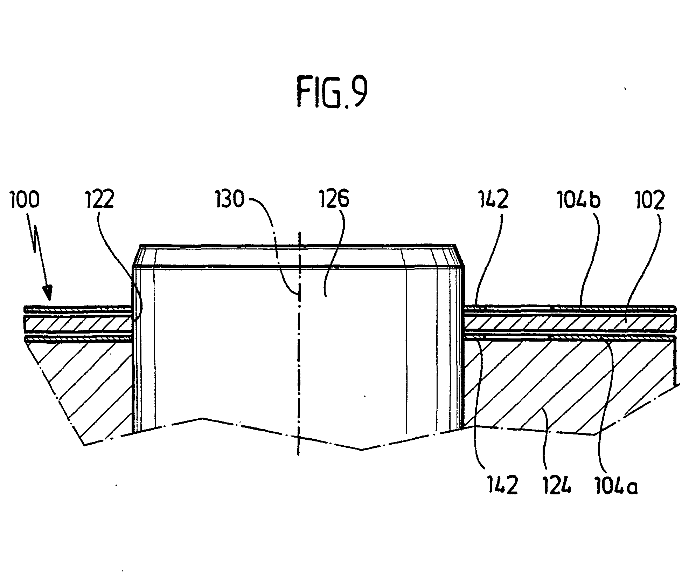

Eine in den Fig. 6 bis 9 dargestellte zweite Ausführungsform einer Flachdichtung 100 unterscheidet sich von der vorstehend beschriebenen ersten Ausführungsform dadurch, daß die Funktionen der mittleren Lage und der äußeren Lagen der Flachdichtung 100 miteinander vertauscht sind. Die zweite Ausführungsform einer Flachdichtung 100 weist somit eine untere Klemmlage 104a und eine obere Klemmlage 104b sowie eine zwischen den Klemmlagen angeordnete Positionierlage 102 auf.

Die mittlere Positionierlage 102 weist ein Positionierloch 122 auf, das im wesentlichen denselben Querschnitt wie das zugehörige Positionierelement 126 aufweist. Die Mittelachse 130 des Positionierkanals 116 verläuft durch den Mittelpunkt 128 des Positionierlochs 122 der mittleren Positionierlage, 102 senkrecht zu den Lagen der Flachdichtung 100.

Die Klemmlagen 104a und 104b weisen jeweils Positionierkanal-Durchgangslöcher 120 auf, welche durch Ausbildung zweier Ausbuchtungen 132 und eines dieselben miteinander verbindenden Klemmrands 134 von der Kreisform des Positionierlochs 122 abweichen.

Neben jedem der Positionierkanal-Durchgangslöcher 120 der Klemmlagen 104a, 104b ist jeweils eine im wesentlichen ovale, als Durchgangsloch in der jeweiligen Lage ausgebildete Ausnehmung 136 angeordnet, welche durch einen als Klemmelement 142 dienenden Steg 138 von dem Positionierkanal-Durchgangsloch 120 getrennt ist.

Ein durch den Klemmrand 134 begrenzter Klemmbereich 140 des Klemmelements 142 steht vor dem Einführen des jeweiligen Positionierelements 126 über die Berandung des Positionierlochs 122 in der Positionierlage 102 hinaus in den Positionierkanal 116 vor.

Beim Einführen des Positionierelements 126 in den Positionierkanal 116 werden die Klemmelemente 142 der Klemmlagen 104a, 104b senkrecht zur Achse 130 des Positionierkanals 116 innerhalb der jeweiligen Klemmlage 104a, 104b längs einer parallel zur jeweiligen Klemmlage 104a, 104b gerichteten Verschiebungsrichtung 143 in die jeweilis zugehörige Ausnehmung 136 hinein verschoben, um dem Positionierelement 126 den Durchtritt durch die Flachdichtung 100 zu ermöglichen. Die Klemmbereiche 140 der Klemmelemente 142 stehen nach dem Einführen des jeweiligen Positionierelements 126 in Klemmkontakt mit dem Positionierelement, so daß die Flachdichtung 100 durch Klemmwirkung an den Positionierelementen 126 gehalten ist.

Durch die Verwendung zweier Klemmbereiche 140 in zwei verschiedenen Klemmlagen 104a, 104b wird eine besonders zuverlässige Klemmwirkung erzielt, durch welche die Flachdichtung 100 insbesondere auch dann an dem Motorblock 124 (oder alternativ an dem Zylinderkopf) gehalten wird, falls eines der Klemmelemente 142 beschädigt worden sein sollte oder aufgrund zu großer Abweichung von den Normmaßen keine Klemmwirkung entfalten sollte.

Im übrigen stimmt die zweite Ausführungsform einer Flachdichtung 100 hinsichtlich Aufbau und Funktion mit der ersten Ausführungsform überein, auf deren vorstehende Beschreibung insoweit Bezug genommen wird.

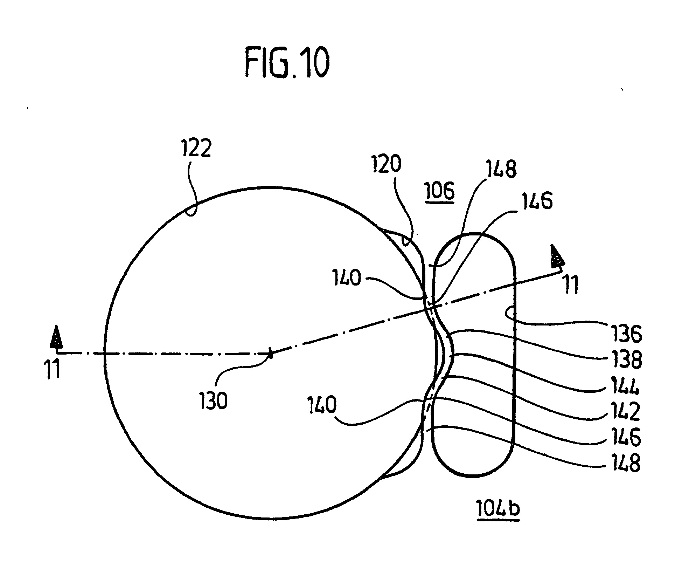

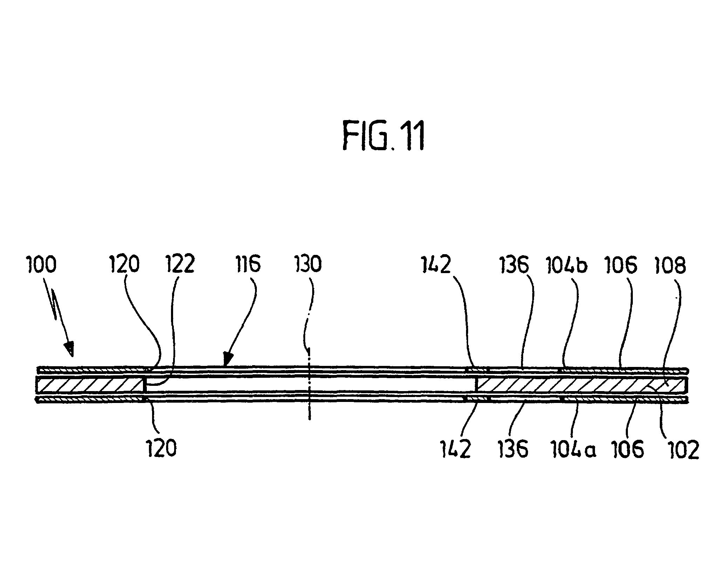

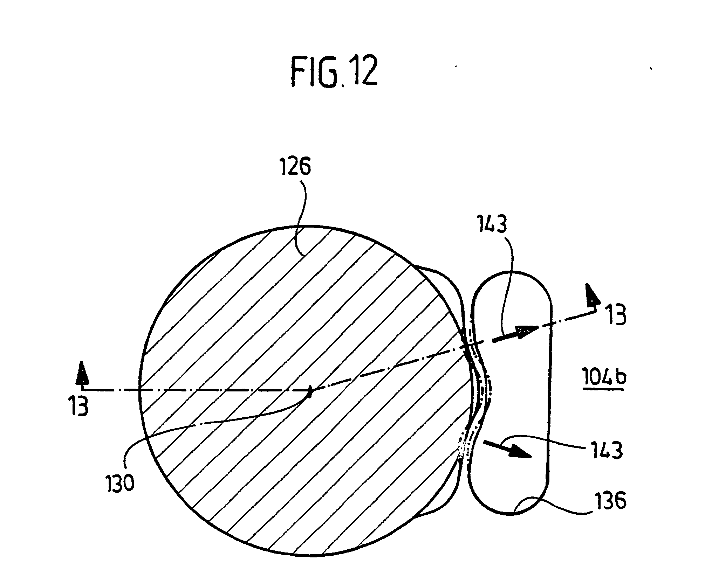

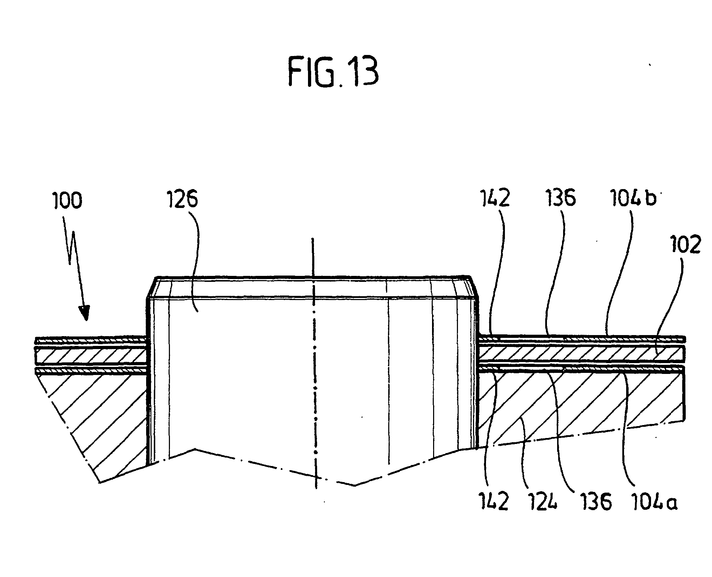

Eine in den Fig. 10 bis 13 dargestellte dritte Ausführungsform einer Flachdichtung 100 unterscheidet sich von der zweiten Ausführungsform dadurch, daß die als Klemmelemente 142 dienenden Stege 138 der Klemmlagen 104a, 104b nicht im wesentlichen geradlinig, sondern gekrümmt ausgebildet sind und jeweils einen mittleren, von dem Positionierkanal-Durchgangsloch 120 weg in die benachbarte Ausnehmung 136 hinein gekrümmten Mittelabschnitt 144 umfassen, welcher über entgegengesetzt gekrümmte Seitenabschnitte 146 in die im wesentlichen geradlinigen Endabschnitte 148 des jeweiligen Stegs 138 übergeht, an welchen der jeweilige Steg 138 mit der jeweiligen Platte 106 der Klemmlage 104a, 104b verbunden ist.

Die dem Positionierkanal-Durchgangsloch 120 zugewandten Bereiche der Seitenabschnitte 146 jeden Stegs 138 stehen dabei über die Berandung des Positionierlochs 122 der mittleren Positionierlage 104 hinaus in den Positionierkanal 116 vor, solange des Positionierelement 126 noch nicht in den Positionierkanal 116 eingeführt worden ist, und bilden somit jeweils zwei längs des Umfangs des Positionierkanal-Durchgangslochs 120 voneinander beabstandete Klemmbereiche 140 des Klemmelements 142.

Beim Einführen des jeweiligen Positionierelements 126 werden die Seitenabschnitte 146 der Stege 138 senkrecht zur Mittelachse 130 des Positionierkanals 116 innerhalb der jeweiligen Klemmlage 104a, 104b längs der zu der Klemmlage 104a, 104b parallelen Verschiebungsrichtungen 143 in die Ausnehmung 136 hinein verschoben, während der Mittelabschnitt 144 des Stegs 138 aufgrund der Verformung des Stegs 138 geringfügig aus der Ausnehmung 136 heraus bewegt wird.

Nach dem Einführen des Positionierelements 126 stehen beide Klemmbereiche 140 jedes als Klemmelement 142 dienenden Steges 138 in Klemmkontakt mit der Mantelfläche des Positionierelements 126, so daß die Flachdichtung 100 durch Klemmwirkung an dem Positionierelement 126 gehalten ist.

Durch die Verwendung von jeweils zwei längs des Umfangs des Positionierelements 126 voneinander beabstandeten Klemmbereiche 140 wird eine besonders zuverlässige Klemmwirkung erzielt. Außerdem ist die erforderliche Verschiebung der Klemmbereiche 140 aus dem Positionierkanal 116 heraus durch die gekrümmte Form des Steges 138 leichter realisierbar.

Im übrigen stimmt die dritte Ausführungsform einer Flachdichtung mit der zweiten Ausführungsform überein, auf deren vorstehende Beschreibung insoweit Bezug genommen wird.

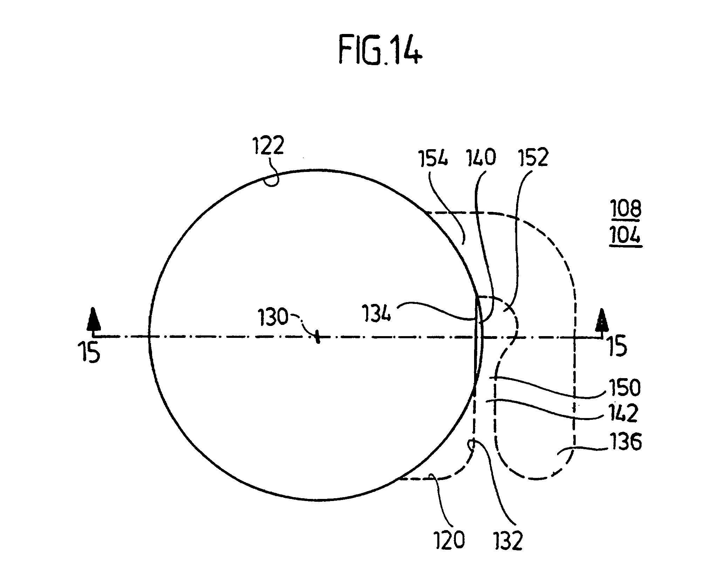

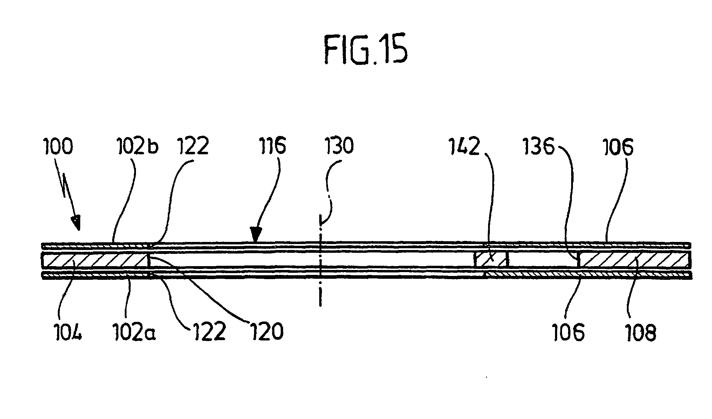

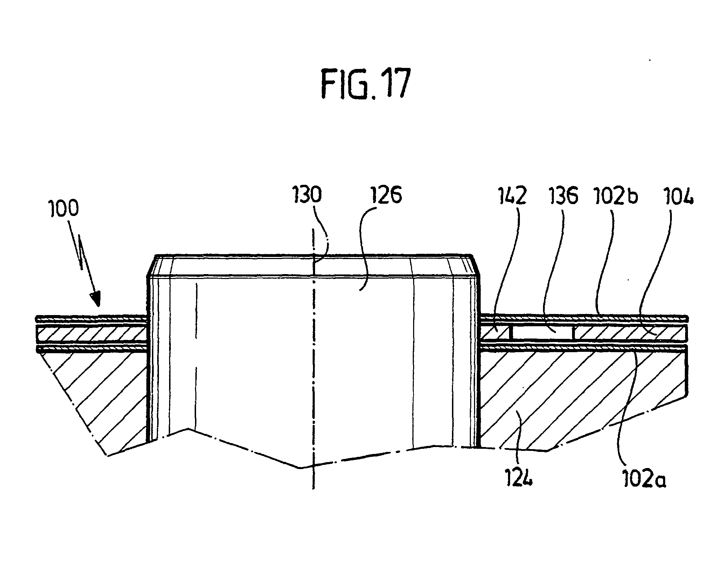

Eine in den Fig. 14 bis 17 dargestellte vierte Ausführungsform einer Flachdichtung unterscheidet sich von der vorstehend beschriebenen ersten Ausführungsform dadurch, daß das in der mittleren Klemmlage 104 vorgesehene Klemmelement 142 nicht als beidseitig an der Platte 108 festgelegter Steg, sondern als nur einseitig festgelegte Zunge 150 ausgebildet ist.

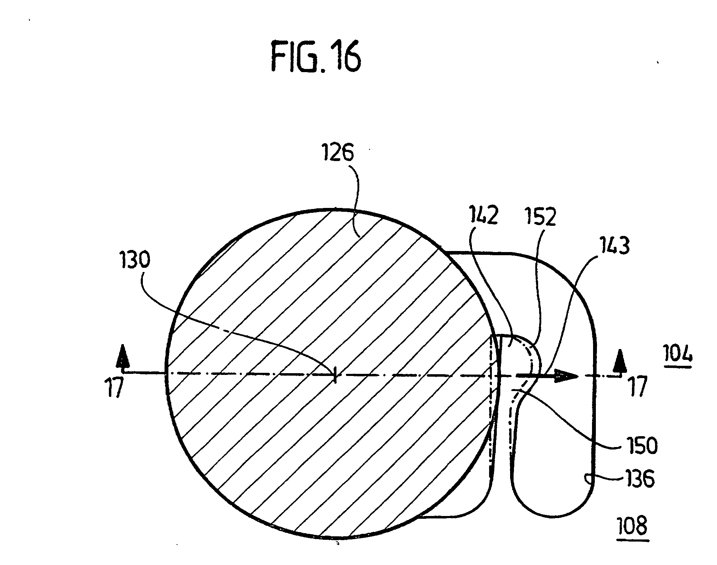

Wie insbesondere aus den Fig. 14 und 16 zu ersehen ist, umfaßt die Zunge 150 einen verbreiterten Endabschnitt 152, welcher zu dem Positionierkanal-Durchgangsloch 120 hin durch einen im wesentlichen geradlinigen Klemmrand 134 berandet ist.

Der Klemmrand 134 begrenzt einen Klemmbereich 140 der als Klemmelement 142 dienenden Zunge 150, welcher vor dem Einführen des jeweiligen Positionierelements 126 in den Positionierkanal 116 über die Berandung der Positionierlöcher 122 in den Positionierlagen 102a, 102b hinaus in den Positionierkanal 116 vorsteht.

Bei dieser vierten Ausführungsform weist das Positionierkanal-Durchgangsloch 120 nur eine, an die Zunge 150 angrenzende, Ausbuchtung 132 auf; statt der zweiten Ausbuchtung ist bei dieser Ausführungsform ein das Positionierkanal-Durchgangsloch 120 mit der Ausnehmung 136 verbindender Durchlaß 154 vorhanden.

Beim Einführen des jeweiligen Positionierelements 126 in den Positionierkanal 116 wird die Zunge 150 senkrecht zur Mittelachse 130 des Positionierkanals 116 innerhalb der Klemmlage 104 längs einer zur Klemmlage 104 parallelen Verschiebungsrichtung 143 in die Ausnehmung 136 hinein verschoben. Nach Einführen des Positionierelements 126 steht der Klemmbereich 140 der als Klemmelement 142 dienenden Zunge 150 in Klemmkontakt mit der Mantelfläche des Positionierelements 126, so daß die Flachdichtung 100 durch Klemmwirkung an dem Positionierelement 126 gehalten ist.

Die nur einseitig an der Platte 106 festgelegte Zunge 150 weist eine größere Beweglichkeit auf als der Steg 138 der ersten Ausführungsform, so daß das Klemmelement 142 der vierten Ausführungsform leichter aus dem Positionierkanal 116 verdrängbar ist.

Im übrigen stimmt die vierte Ausführungsform einer Flachdichtung hinsichtlich Aufbau und Funktion mit der ersten Ausführungsform überein, auf deren vorstehende Beschreibung insoweit Bezug genommen wird.

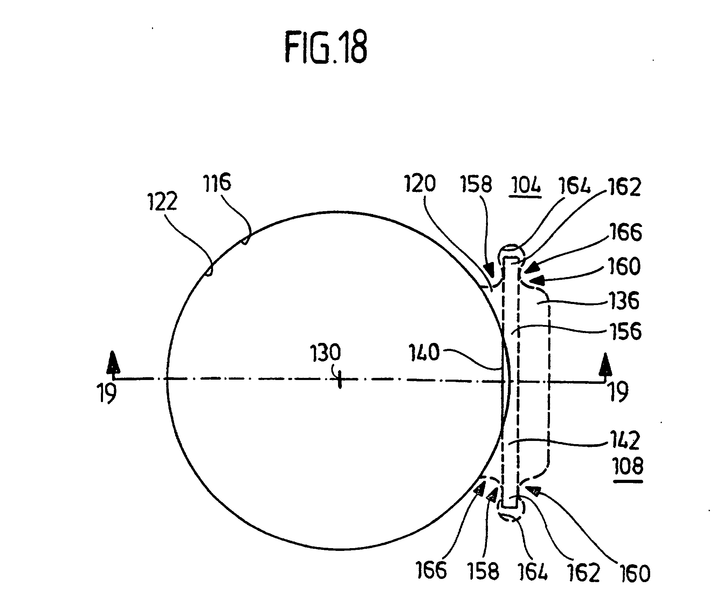

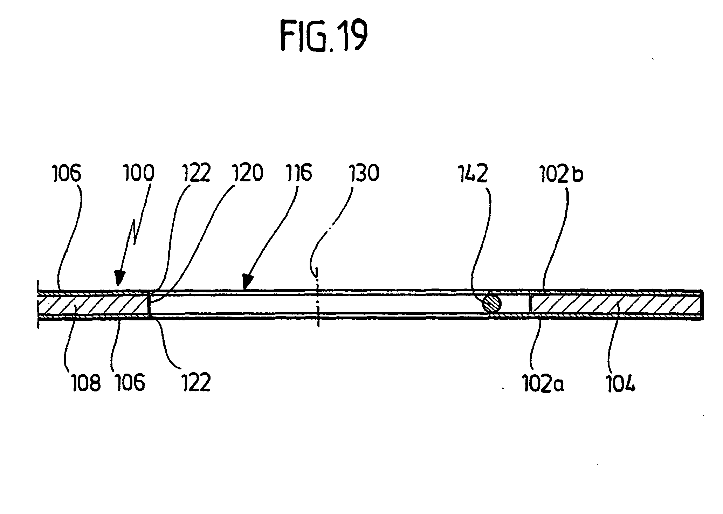

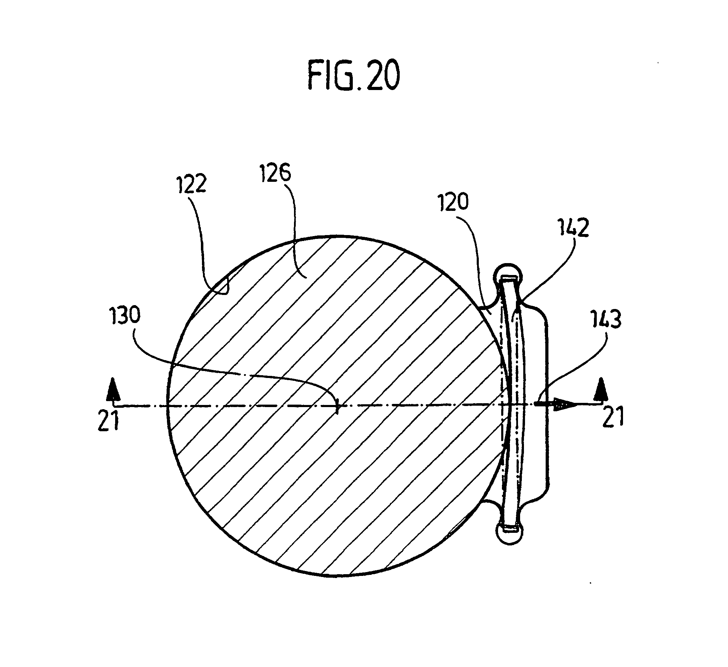

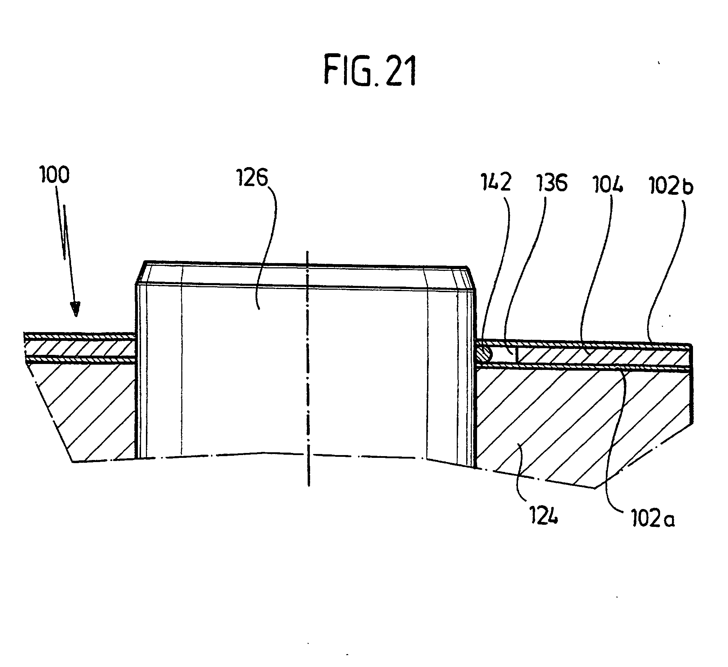

Eine in den Fig. 18 bis 21 dargestellte fünfte Ausführungsform einer Flachdichtung unterscheidet sich von der vorstehend beschriebenen ersten Ausführungsform dadurch, daß das in der mittleren Klemmlage 104 vorgesehene Klemmelement 142 nicht als beidseitig an der Platte 108 festgelegter Steg, sondern als separate Federspange 156 ausgebildet ist, welche an beiden Enden in einer Halterung an der Platte 108 gehalten ist.

Wie aus Fig. 18 zu ersehen ist, läuft die Berandung des Positionierkanal-Durchgangslochs 120 der Klemmlage 104 in zwei abgerundeten Nasen 158 aus, deren Enden in Bezug auf die Mittelachse 130 des Positionierkanals 116 einen Winkelabstand von ungefähr 60° aufweisen.

Auch die Berandung der zur Aufnahme des Klemmelements 142 dienenden Ausnehmung 136 in der Klemmlage 104 läuft beiderseits in jeweils eine Nase 160 aus, welche jeweils einer der Nasen 158 gegenüberliegt, so daß zwischen jeweils zwei Nasen 158, 160 ein Durchlaß 162 gebildet ist, welcher in eine tropfenförmige Ausbuchtung 164 mündet.

Das Klemmelement 142 in der Form einer Federspange 156, welche als im wesentlichen zylindrischer Stab ausgebildet ist, ist mit jeweils einem seiner beiden Enden durch einen Durchlaß 162 hindurch in die zugehörige Ausbuchtung 164 geführt, wobei der Durchmesser der Federspange 156 im wesentlichen der Breite des Durchlasses 162 entspricht, so daß die Federspange 156 zwischen den beiden Nasen 158 und 160 festgeklemmt ist und jeweils eine Nase 158 zusammen mit einer derselben gegenüberliegenden Nase 160 eine Halterung 166 für jeweils ein Ende der Federspange 156 bilden.

Ein mittiger Klemmbereich 140 der als Klemmelement 142 dienenden Federspange 156 steht vor dem Einführen des jeweiligen Positionierelements 126 in den Positionierkanal 116 über die Berandung der Positionierlöcher 122 in den Positionierlagen 102a, 102b hinaus in den Positionierkanal 116 vor.

Beim Einführen des jeweiligen Positionierelements 126 in den Positionierkanal 116 wird die Federspange 156 durchgebogen, so daß sich ihr mittlerer Abschnitt längs einer Verschieberichtung 143, welche parallel zur Klemmlage 104 und senkrecht zur Mittelachse 130 des Positionierkanals 116 verläuft, in die Ausnehmung 136 hinein verschiebt. Nach Einführen des Positionierelements 126 steht der Klemmbereich 140 der als Klemmelement 142 dienenden Federspange in Klemmkontakt mit der Mantelfläche des Positionierelements 126, so daß die Flachdichtung 100 durch Klemmwirkung an dem Positionierelement 126 gehalten ist.

Da sich die Enden der Federspange 156 beim Durchbiegen der Federspange 156 relativ zu den Halterungen 166 bewegen können, muß zum Verdrängen des Klemmelements 142 aus dem Positionierkanal 116 eine geringere Kraft aufgewendet werden als bei dem an beiden Enden einstückig mit der Platte 108 verbundenen Steg 138 der ersten Ausführungsform.

Außerdem weist die Federspange 156 eine Formelastizität auf, so daß die Durchbiegung der Federspange 156 nach Entfernen des Positionierelements 126 aus dem Positionierkanal 116 rückgängig gemacht wird und das Klemmelement 142 nach dem Abnehmen der Flachdichtung 100 von dem Motorblock 124, beispielsweise nach Feststellen eines Defekts, wieder in der ursprünglichen Gestalt für einen weiteren Klemmvorgang zur Verfügung steht.

Im übrigen stimmt die fünfte Ausführungsform einer Flachdichtung hinsichtlich Aufbau und Funktion mit der ersten Ausführungsform überein, auf deren vorstehende Beschreibung insoweit Bezug genommen wird.

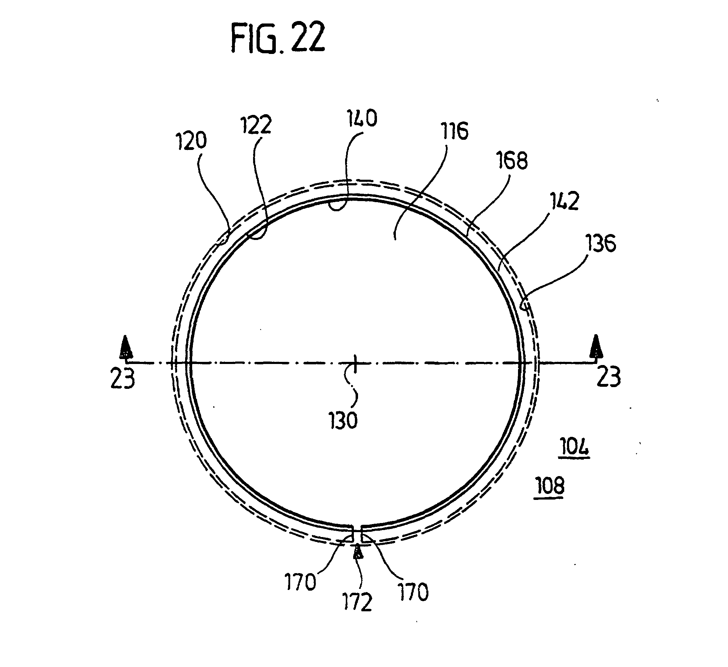

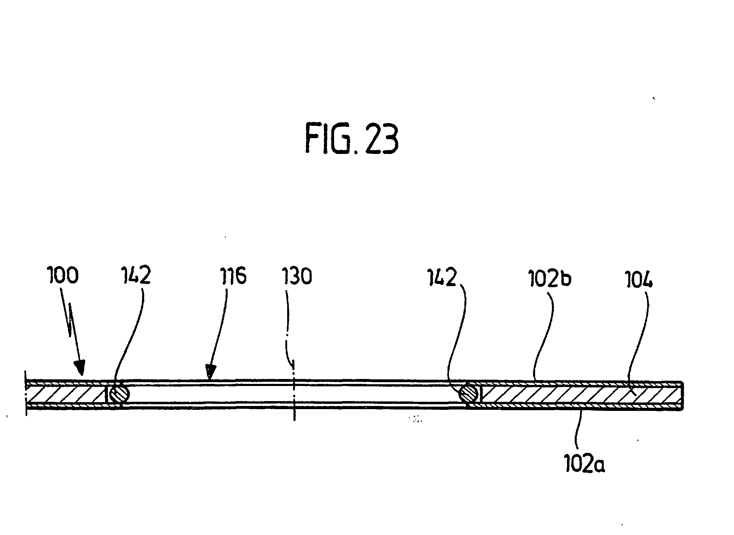

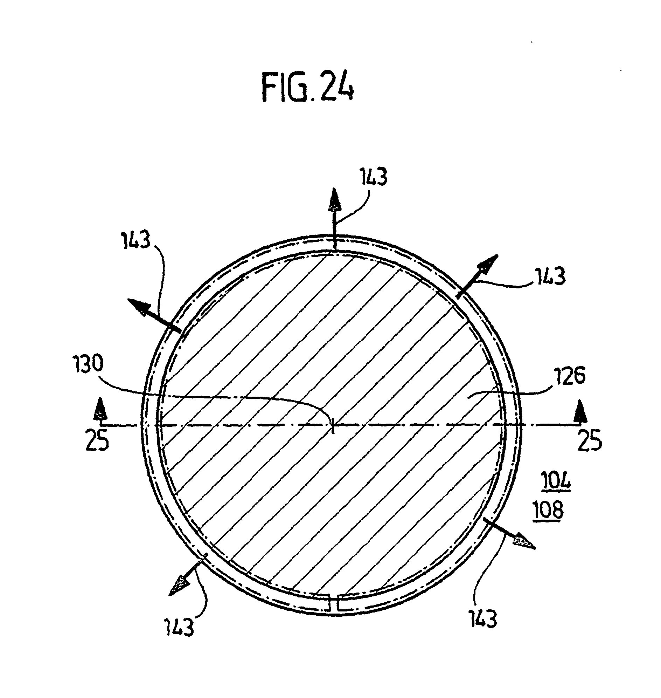

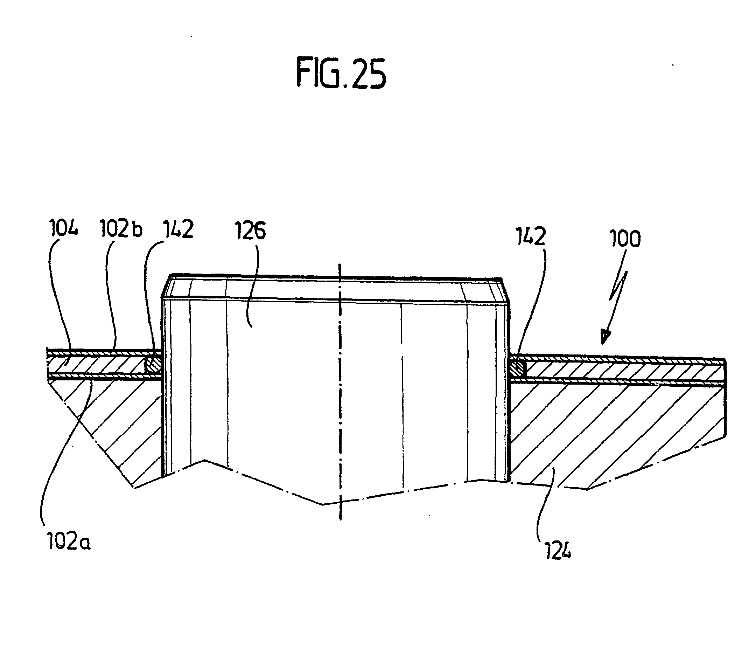

Eine in den Fig. 22 bis 25 dargestellte sechste Ausführungsform einer Flachdichtung unterscheidet sich von der vorstehend beschriebenen fünften Ausführungsform dadurch, daß das in der mittleren Klemmlage 104 vorgesehene separate Klemmelement 142 nicht als an seinen beiden Enden in jeweils einer Halterung 166 gehaltene Federspange 156, sondern als ein offener Federring 168 ausgebildet ist, welcher die Achse 130 des Positionierkanals 116 in der Klemmlage 104 ringförmig umgibt, wobei der Federring 168 einen im wesentlichen kreisförmigen Querschnitt aufweist und zwischen den beiden Stirnflächen 170 des Federrings 168 ein Spalt 172 ausgebildet ist.

Der radial innere Bereich des Federrings 168 stellt einen Klemmbereich 140 des als Klemmelement 142 dienenden Federrings 168 dar, welcher vor dem Einführen des jeweiligen Positionierelements 126 in den Positionierkanal 116 über die Berandung der Positionierlöcher 122 in den Positionierlagen 102a, 102b hinaus in den Positionierkanal 116 vorsteht.

Die Ausnehmung 136 zur Aufnahme des Klemmelements 142 nach Einführend es Positionierelements 126 ist bei der sechsten Ausführungsform einer Flachdichtung 100 als eine den Positionierkanal 116 in der Klemmlage 104 konzentrisch umgebende ringförmige Ausnehmung ausgebildet. Bei dieser Ausführungsform umfaßt somit das in der Klemmlage 104 ausgebildete Positionierkanal-Durchgangsloch 120 einen zentralen Bereich, dessen Querschnitt dem Querschnitt des Positionierelements 126 entspricht, und einen daran angrenzenden ringförmigen Randbereich, welcher als Ausnehmung 136 zur Aufnahme des Klemmelements 142 dient.

Beim Einführen des jeweiligen Positionierelements 126 in den Positionierkanal 116 wird der Federring 168 aufgeweitet und somit in radial zur Mittelachse 130 des Positionierkanals 116 ausgerichteten, innerhalb der Klemmlage 104 verlaufenden Verschiebungsrichtungen 143 in die Ausnehmung 136 hinein bewegt.

Nach Einführen des Positionierelements 126 steht der radial innen liegende Klemmbereich 140 des als Klemmelement 142 dienenden Federrings 168 in Klemmkontakt mit der Mantelfläche des Positionierelements 126, so daß die Flachdichtung 100 durch Klemmwirkung an dem Positionierelement 126 gehalten ist.

Da der Federring 168 über nahezu den gesamten Umfang des Positionierelements 126 an demselben anliegt, ist bei der sechsten Ausführungsform einer Flachdichtung eine besonders hohe Klemmkraft erzielbar.

Außerdem weist der Federring 168 eine hohe Formelastizität auf, so daß der Federring 168 nach Entfernen des Positionierelements 126 aus dem Positionierkanal 116 im wesentlichen unverändert seine ursprüngliche Gestalt wieder einnimmt. Die Flachdichtung 100 gemäß der sechsten Ausführungsform kann daher ohne weiteres mehrfach auf Positionierelemente 126 aufgedrückt und an denselben festgeklemmt werden, ohne daß hierzu die als Klemmelemente 142 dienenden Federringe 168 ausgetauscht oder in ihre ursprüngliche Gestalt zurückverformt werden müßten.

Im übrigen stimmt die sechste Ausführungsform einer Flachdichtung hinsichtlich Aufbau und Funktion mit der fünften Ausführungsform überein, auf deren vorstehende Beschreibung insoweit Bezug genommen wird.

## Patentansprüche

1. Flachdichtung zur Anordnung zwischen zwei Komponenten eines Kraftfahrzeugs, insbesondere zwischen einem Motorblock (124) und einem Zylinderkopf, umfassend eine oder mehrere Lagen, wobei in der Lage oder den Lagen der Flachdichtung (100) jeweils mindestens ein Positionierkanal-Durchgangsloch (118, 120) gebildet ist und diese Positionierkanal-Durchgangslöcher mindestens einen Positionierkanal (116) zur Aufnahme eines an einer der Komponenten angeordneten Positionierelements (126) bilden und wobei mindestens eine Lage der Flachdichtung (100) als Klemmlage (104; 104a, 104b) ausgebildet ist, in welcher ein Klemmelement (142) mit mindestens einem Klemmbereich (140) angeordnet ist, der sich vor Einführen des Positionierelements (126) in den Positionierkanal (116) zumindest teilweise in dem Positionierkanal (116) befindet und nach Einführen des Positionierelements (126) in den Positionierkanal (116) so in Klemmkontakt mit dem Positionierelement (126) steht, daß die Flachdichtung (100) durch Klemmwirkung an dem Positionierelement (126) gehalten ist,
**dadurch gekennzeichnet, daß**
die Klemmlage (104; 104a, 104b) der Flachdichtung (100) eine Ausnehmung (136) zur Aufnahme des Klemmelements (142) umfaßt und daß das Klemmelement (142) beim Einführen des Positionierelements (126) in den Positionierkanal (116) zumindest teilweise längs einer Verschiebungsrichtung (143), die im wesentlichen parallel zu der Klemmlage (104; 104a, 104b) gerichtet ist, innerhalb der Klemmlage in die Ausnehmung (136) hinein bewegt wird.

2. Flachdichtung nach Anspruch 1, **dadurch gekennzeichnet, daß** die Flachdichtung (100) außer der Klemmlage (104; 104a, 104b) mindestens eine Positionierlage (102a, 102b; 102) umfaßt, deren zum Positionierkanal (116) gehörendes Positionierkanal-Durchgangsloch (120a, 120b; 120) als ein Positionierloch (122) für das Positionierelement (126) ausgebildet ist, das im wesentlichen denselben Querschnitt wie das Positionierelement (126) aufweist.

3. Flachdichtung nach Anspruch 2, **dadurch gekennzeichnet, daß** die Flachdichtung (100) mindestens zwei Positionierlagen (102a, 102b) umfaßt.

4. Flachdichtung nach einem der Ansprüche 1 bis 3, **dadurch gekennzeichnet, daß** die Flachdichtung (100) mindestens zwei Klemmlagen (104a, 104b) umfaßt.

5. Flachdichtung nach einem der Ansprüche 1 bis 4, **dadurch gekennzeichnet, daß** die Klemmlage eine Platte (106; 108) aus einem metallischen Material umfaßt und daß das Klemmelement (142) einstückig mit dieser Platte (108; 106) ausgebildet ist.

6. Flachdichtung nach Anspruch 5, **dadurch gekennzeichnet, daß** das Klemmelement (142) als Steg (138) ausgebildet ist, welcher das zum Positionierkanal (116) gehörende Positionierkanal-Durchgangsloch (120) der Klemmlage (104; 104a, 104b) und die in der Klemmlage (104; 104a, 104b) vorgesehene Ausnehmung (136) zur Aufnahme des Klemmelements (142) voneinander trennt.

7. Flachdichtung nach einem der Ansprüche 1 bis 4, **dadurch gekennzeichnet, daß** die Klemmlage (104; 104a, 104b) eine Platte (108; 106) aus einem metallischen Material umfaßt und daß das Klemmelement (142) als separates Teil ausgebildet ist.

8. Flachdichtung nach Anspruch 7, **dadurch gekennzeichnet, daß** das Klemmelement (142) als ringförmiges Federelement ausgebildet ist.

9. Flachdichtung nach Anspruch 7, **dadurch gekennzeichnet, daß** das Klemmelement (142) als an mindestens einem Ende mittels einer Halterung (166) an der Platte (108) gehaltenes Federelement (156) ausgebildet ist.

10. Flachdichtung nach einem der Ansprüche 1 bis 9, **dadurch gekennzeichnet, daß** das Klemmelement (142) eine solche Elastizität aufweist, daß es sich nach Entfernen des Positionierelements (126) aus dem Positionierkanal (116) zumindest teilweise in den Positionierkanal (116) zurück bewegt.

11. Flachdichtung nach einem der Ansprüche 1 bis 10, **dadurch gekennzeichnet, daß** das Klemmelement (142) mindestens zwei voneinander beabstandete Klemmbereiche (140) aufweist.

12. Komponente eines Kraftfahrzeugs, insbesondere Motorblock oder Zylinderkopf, mit mindestens einem daran angeordneten Positionierelement (126) und einer durch Klemmwirkung an dem Positionierelement (126) gehaltenen Flachdichtung (100) nach einem der Ansprüche 1 bis 11.

## Claims

1. A flat gasket to be disposed between two components of a motor vehicle, in particular between an engine block (124) and a cylinder head, comprising one or more layers, wherein in each case at least one positioning duct through-hole (118, 120) is formed in the layer or layers of the flat gasket (100) and these positioning duct through-holes form at least one positioning duct (116) to accommodate a positioning element (126) disposed on one of the components and wherein at least one layer of the flat gasket (100) is constructed as a clamping layer (104; 104a, 104b), in which a clamping element (142) having at least one clamping region (140) is disposed, which before the introduction of the positioning element (126) into the positioning duct (116) is situated at least partially in the positioning duct (116) and after the introduction of the positioning element (126) into the positioning duct (116) is in clamping contact with the positioning element (126) so that the flat gasket (100) is held by clamping action against the positioning element (126),
**characterised in that** the clamping layer (104; 104a, 104b) of the flat gasket (100) comprises a recess (136) for accommodating the clamping element (142)
and **in that**, upon the introduction of the positioning element (126) into the positioning duct (116), the clamping element (142) is moved inside the clamping layer into the recess (136) at least to some extent in a displacement direction (143) which is directed substantially parallel to the clamping layer (104; 104a, 104b).

2. A flat gasket according to Claim 1,
**characterised in that** the flat gasket (100) comprises, apart from the clamping layer (104; 104a, 104b) at least one positioning layer (102a, 102b; 102), whose positioning duct through-hole (120a, 120b; 120) belonging to the positioning duct (116) is constructed as a positioning hole (122) for the positioning element (126), which substantially as the same cross section as the positioning element (126).

3. A flat gasket according to Claim 2,
**characterised in that** the flat gasket (100) comprises a least two positioning layers (102a, 102b).

4. A flat gasket according to one of Claims 1 to 3,
**characterised in that** the flat gasket (100) comprises at least two clamping layers (104a, 104b).

5. A flat gasket according to one of Claims 1 to 4,
**characterised in that** the clamping layer comprises a plate (106; 108) made from a metallic material
and **in that** the clamping element (142) is constructed in one piece with this plate (108; 106).

6. A flat gasket according to Claim 5,
**characterised in that** the clamping element (142) is constructed as a web (138), which separates the positioning duct through-hole (120) of the clamping layer (104; 104a, 104b) belonging to the positioning duct (116) and the recess (136) provided in the clamping layer (104; 104a, 104b) to accommodate the clamping element (142).

7. A flat gasket according to one of Claims 1 to 4,
**characterised in that** the clamping layer (104; 104a, 104b) comprises a plate (108; 106) made from a metallic material
and **in that** the clamping element (142) is constructed as a separate part.

8. A flat gasket according to Claim 7,
**characterised in that** the clamping element (142) is constructed as an annular spring element.

9. A flat gasket according to Claim 7,
**characterised in that** the clamping element (142) is constructed as a spring element (156) held on the plate (198) at one end at least by means of a mounting (166).

10. A flat gasket according to one of Claims 1 to 9,
**characterised in that** the clamping element (142) has such elasticity that it moves back at least to some extent into the positioning duct (116) after the removal of the positioning element (126) from the positioning duct (116).

11. A flat gasket according to one of Claims 1 to 10,
**characterised in that** the clamping element (142) comprises at least two spaced apart clamping regions (140).

12. A component of a motor vehicle, in particular an engine block or cylinder head, having at least one positioning element (126) disposed thereon and a flat gasket (100) according to one of Claims 1 to 11 that is held on the positioning element (126) by clamping action.

## Revendications

1. Joint d'étanchéité plat destiné à être agencé entre deux composants d'un véhicule automobile, en particulier entre un bloc moteur (124) et une culasse, comportant une ou plusieurs couches, dans lequel au moins un trou traversant formant canal de positionnement respectif (118, 120) est formé dans la couche ou dans les couches du joint plat (100), et ces trous traversants formant canal de positionnement forment au moins un canal de positionnement (116) pour recevoir un élément de positionnement (126) agencé sur l'un des composants, et au moins une couche du joint plat (100) est réalisée sous forme de couche de serrage (104 ; 104a, 104b) dans laquelle est agencé un élément de serrage (142) avec au moins une zone de serrage (140) qui, avant introduction de l'élément de positionnement (126) dans le canal de positionnement (116), se trouve au moins partiellement dans le canal de positionnement (116) et qui, après introduction de l'élément de positionnement (126) dans le canal de positionnement (116), est en contact de serrage avec l'élément de positionnement (126) de telle sorte que le joint plat (100) est retenu par effet de serrage sur l'élément de positionnement (126),
**caractérisé en ce que**
la couche de serrage (104 ; 104a, 104b) du joint plat (100) présente un évidement (136) pour recevoir l'élément de serrage (142), et **en ce que** lors de l'introduction de l'élément de positionnement (126) dans le canal de positionnement (116), l'élément de serrage (142) est déplacé à l'intérieur de la couche de serrage jusque dans l'évidement (136) au moins partiellement le long d'une direction de déplacement (143) orientée sensiblement parallèlement à la couche de serrage (104 ; 104a, 104b).

2. Joint plat selon la revendication 1, **caractérisé en ce que** le joint plat (100) comprend, outre la couche de serrage (104 ; 104a, 104b), au moins une couche de positionnement (102a, 102b ; 102) dont le trou traversant (120a, 120b ; 120) appartenant au canal de positionnement (116) est réalisé sous la forme d'un trou de positionnement (122) pour l'élément de positionnement (126) qui présente sensiblement la même section transversale que l'élément de positionnement (126).

3. Joint plat selon la revendication 2, **caractérisé en ce que** le joint plat (100) comprend au moins deux couches de positionnement (102a, 102b).

4. Joint plat selon l'une des revendications 1 à 3, **caractérisé en ce que** le joint plat (100) comprend au moins deux couches de serrage (104a, 104b).

5. Joint plat selon l'une des revendications 1 à 4, **caractérisé en ce que** la couche de serrage comprend une plaque (106 ; 108) en matériau métallique, et **en ce que** l'élément de serrage (142) est réalisé d'un seul tenant avec cette plaque (108 ; 106).

6. Joint plat selon la revendication 5, **caractérisé en ce que** l'élément de serrage (142) est réalisé sous forme de barrette (138) qui sépare l'un de l'autre le trou traversant (120), appartenant au canal de positionnement (116), de la couche de serrage (104 ; 104a, 104b) et l'évidement (136) prévu dans la couche de serrage (104 ; 104a, 104b) et destiné à recevoir l'élément de serrage (142).

7. Joint plat selon l'une des revendications 1 à 4, **caractérisé en ce que** la couche de serrage (104 ; 104a, 104b) comprend une plaque (108 ; 106) en matériau métallique, et **en ce que** l'élément de serrage (142) est réalisé sous forme de pièce séparée.

8. Joint plat selon la revendication 7, **caractérisé en ce que** l'élément de serrage (142) est réalisé sous forme d'élément élastique annulaire.

9. Joint plat selon la revendication 7, **caractérisé en ce que** l'élément de serrage (142) est réalisé sous la forme d'un élément élastique (156) retenu à au moins une extrémité sur la plaque (108) au moyen d'une monture (166).

10. Joint plat selon l'une des revendications 1 à 9, **caractérisé en ce que** l'élément de serrage (142) présente une élasticité telle que, après enlèvement de l'élément de positionnement (126) hors du canal de positionnement (116), il retourne au moins partiellement dans le canal de positionnement (116).

11. Joint plat selon l'une des revendications 1 à 10, **caractérisé en ce que** l'élément de serrage (142) comprend au moins deux zones de serrage (140) écartées l'une de l'autre.

12. Composant d'un véhicule automobile, en particulier bloc moteur ou culasse, comportant au moins un élément de positionnement (126) agencé sur celui-ci et un joint plat (100) selon l'une des revendications 1 à 11 retenu par effet de serrage sur l'élément de positionnement (126).
